(19) **Europäisches Patentamt / European Patent Office / Office européen des brevets**

(11) **EP 3 223 560 A1**

(12) **EUROPEAN PATENT APPLICATION**
published in accordance with Art. 153(4) EPC

(43) Date of publication:
27.09.2017 Bulletin 2017/39

(21) Application number: 15860266.4

(22) Date of filing: 11.11.2015

(51) Int Cl.:
*H04W 48/06* (2009.01)     *H04W 28/12* (2009.01)
*H04W 88/18* (2009.01)

(86) International application number:
**PCT/JP2015/005635**

(87) International publication number:
**WO 2016/079958 (26.05.2016 Gazette 2016/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.11.2014 JP 2014233693**

(71) Applicant: **NEC Corporation**
**Tokyo 108-8001 (JP)**

(72) Inventor: **TAKAHASHI, Eiji**
**Tokyo 108-8001 (JP)**

(74) Representative: **MacDougall, Alan John Shaw**
**Mathys & Squire LLP**
**The Shard**
**32 London Bridge Street**
**London SE1 9SG (GB)**

(54) **COMMUNICATION SYSTEM, COMMUNICATION DEVICE, COMMUNICATION METHOD, AND RECORDING MEDIUM**

(57)     Provided are a communication system, a communication device, a communication method, and a recording medium which enable data to be communicated more efficiently according to the change of the degree of link congestion. This communication device performs data communication with another communication device via a wireless base station, and is provided with: a wireless information collection means for collecting wireless information relating to wireless communication of the other communication device; a congestion degree assessment means for assessing a congestion degree of a wireless link from the collected wireless information; and a schedule determination means for determining the schedule of the data communication with the other communication device on the basis of the assessed congestion degree.

Fig. 1B

Printed by Jouve, 75001 PARIS (FR)

EP 3 223 560 A1

**Description**

[Technical Field]

The present invention relates to a communication system, a communication device, a communication method and a recording medium and, in particular, to a communication system, a communication device, a communication method and a recording medium that enable data to be communicated with an improved efficiency according to changes in the degree of link congestion.

[Background Art]

Since a wide variety of data communications, such as Website viewing, sending and receiving streaming videos, sending and receiving e-mails, sending and receiving electronic files, are performed by using wireless communication terminals these days, data traffic on wireless communication networks is increasing. Accordingly, efficiently communicating data to wireless communication terminals is required. In particular, it is desired that wireless terminals send and receive non-real-time data which does not need to be transmitted in real time in a period of time during which a communication network is not congested.

A technique related to the foregoing is proposed in Patent Literature 1 (PTL1) in which a wireless terminal attempts interstitial communication in each waiting period of time. In the mobile terminal proposed in PTL1, control is performed in each constant waiting period of time to continue communication or suspend the communication until the next period depending on the degree of communication congestion, thereby allowing data communication to be performed in an off-peak period of time in which the degree of congestion is low.

Patent Literature 2 (PTL2) proposes a wireless terminal technique in which when data to be transmitted to a base station is generated, the transmission is suspended on the basis of notification information about link congestion provided from the base station. In a wireless terminal described in PTL2, transmission of suspended data is delayed until the wireless terminal receives clear information from the base station, thereby reducing wasted signaling from the wireless terminal to the base station during link congestion.

Patent Literature 3 (PTL3) proposes a mobile terminal technique that uses a wireless communication method in which a data transmission rate can be predicted from a communication quality calculated by a measured radio intensity value and starts, interrupts and restarts download on the basis of the communication quality value and the data transmission rate. On the basis of the communication quality value and the data transmission rate, the mobile terminal in PTL3 suspends start of download or interrupts ongoing download when high-speed communication may not be achieved. A base station in PTL3 stores data downloaded from a server in a buffer while the mobile terminal is suspending download and, after the mobile terminal restarts the download, can send the buffered data to the mobile terminal. This allows the mobile terminal to download data in a period of time during which high-speed communication can be performed without wasting data.

[Citation List]

[Patent Literature]

[PTL1] Japanese Laid-open Patent No. 2012-165107
[PTL2] PCT International Publication No. WO2014/016861
[PTL3] Japanese Laid-open Patent No. 2004-297479

[Summary of Invention]

[Technical Problem]

However, the data communication methods described in the patent literatures cited above have the following problems.

In the case of the mobile terminal in PTL1, when the degree of communication congestion computed on the basis of the amount of data communication per unit time, for example, decreases after suspension of communication, the next communication may not be started until the expiration of the waiting time. Accordingly, the mobile terminal in PTL1 has a problem that data communication may not be performed efficiently in a situation where the degree of congestion changes in a period shorter than the waiting time.

The wireless terminal in PTL2 may not deal with a situation where the link congestion occurs during data communication, because the wireless terminal has no means for suspending data communication that has been started. In other words, the wireless terminal has difficulty in responding to changes in the degree of congestion.

The mobile terminal in PTL3 aims to perform fast download without wastage. Accordingly, the mobile terminal has a problem that when link congestion occurs during data communication, the mobile terminal does not suspend the data communication as long as the mobile terminal itself can download data at high speed. Further, when there are a plurality of mobile terminals in the coverage of a base station, oscillation may occur in which the individual terminals affect one another to start, suspend and restart communication repeatedly. In other words, the mobile terminal does not meet the purpose of, for example, sending and receiving non-real-time data which does not need to be transmitted in real time in a period of time during which a communication network is not congested.

An object of the present invention is to provide a communication system, a communication device, a communication method and a recording medium that enable data to be communicated with an improved efficiency according to changes in the degree of link congestion.

[Solution to Problem]

To achieve the above-mentioned object, a communication device that performs data communication with another communication device through a wireless base station, includes: a wireless information collection means for collecting wireless information concerning wireless communication of the other communication device; a congestion degree assessment means for assessing the degree of wireless link congestion from the collected wireless information; and a scheduling means for scheduling data communication performed with the other communication device on the basis of the assessed degree of congestion.

A communication system including a communication device that performs data communication with another communication device through a wireless base station, wherein the communication device includes: a wireless information collection means for collecting wireless information concerning wireless communication of the other communication device; a congestion degree assessment means for assessing the degree of wireless link congestion from the collected wireless information; and a scheduling means for scheduling data communication performed with the other communication device on the basis of the assessed degree of congestion.

A communication method for performing data communication with a communication device through a wireless base station, the communication method includes: collecting wireless information concerning wireless communication of the communication device; assessing the degree of wireless link congestion from the collected wireless information; and scheduling data communication performed with the communication device on the basis of the assessed degree of congestion.

A computer-readable recording medium on which a program for performing data communication with a communication device through a wireless base station is recorded, the program causes an information processing device to execute: a wireless information collection step of collecting wireless information concerning wireless communication of the communication device; a congestion degree assessment step of assessing the degree of wireless link congestion from the collected wireless information; and a scheduling step of scheduling data communication performed with the communication device on the basis of the assessed degree of congestion.

[Advantageous Effects of Invention]

The present invention enables data to be communicated with an improved efficiency according to changes in the degree of link congestion.

[Brief Description of Drawings]

[Fig. 1A] Fig. 1A is block diagram illustrating a communication device according to an example embodiment of a broader concept of the present invention.
[Fig. 1B] Fig. 1B is a block diagram illustrating a communication system according to an example embodiment of a broader concept of the present invention.
[Fig. 2] Fig. 2 is a block diagram illustrating a configuration of a communication system according to a first example embodiment of the present invention.
[Fig. 3] Fig. 3 is a flowchart for describing an operation of a server 100 of the first example embodiment of the present invention.
[Fig. 4] Fig. 4 is a diagram illustrating a configuration of a computer that can be used in wireless communication systems according to the example embodiments of the present invention and their variations.

[Fig. 5] Fig. 5 is a block diagram illustrating a configuration of a communication system according to a second example embodiment of the present invention.

[Fig. 6] Fig. 6 is a block diagram illustrating a configuration of a communication system according to a third example embodiment of the present invention.

[Fig. 7] Fig. 7 is a flowchart for describing an operation of a server 100 of the communication system according to the third example embodiment of the present invention.

[Fig. 8] Fig. 8 is a flowchart for explaining an operation of a server 100 of a communication system according to a fourth example embodiment of the present invention.

[Fig. 9] Fig. 9 is a block diagram illustrating a configuration of a communication system according to a fifth example embodiment of the present invention.

[Fig. 10] Fig. 10 is a flowchart for explaining an operation of a server of the communication system according to the fifth example embodiment of the present invention.

[Description of Embodiments]

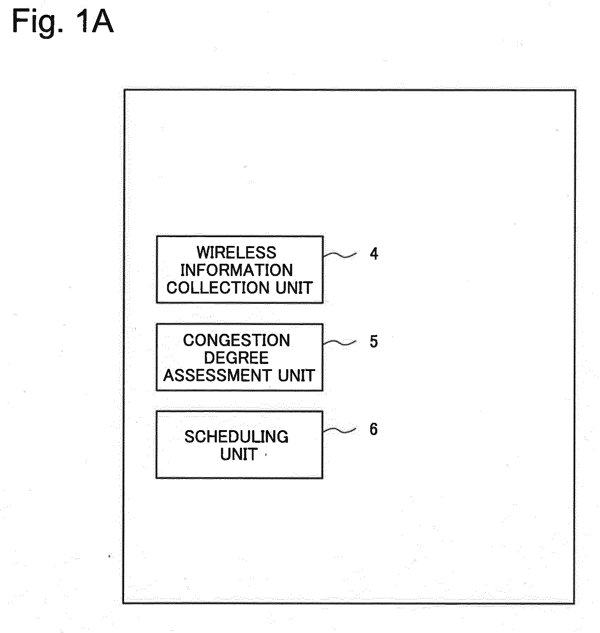

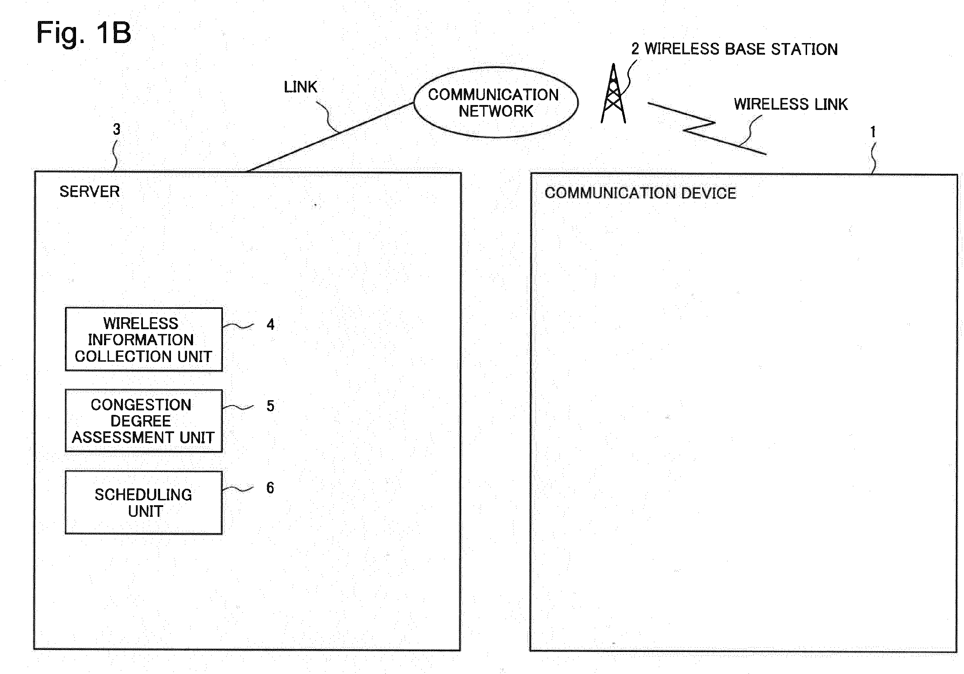

Before describing preferred example embodiments of the present invention, a communication device and a communication system according to example embodiments of a broader concept of the present invention will be described. Fig. 1A is a block diagram illustrating a communication device according to an example embodiment of a broader concept of the present invention. Fig. 1B is a block diagram illustrating a communication system according to an example embodiment of the present invention.

The communication device in Fig. 1A is a communication device that performs data communication with another communication device through a wireless base station. The communication device in Fig. 1A includes a wireless information collection unit 4 which collects wireless information concerning wireless communication of the other communication device, and a congestion degree assessment unit 5 which assesses the degree of congestion of a wireless link on the basis of the collected wireless communication information. The communication device in Fig. 1A further includes a scheduling unit 6 which schedules data communication performed with the other communication device on the basis of the assessed degree of congestion.

The communication system in Fig. 1B includes a server 3, which is an example of a communication device that performs data communication with another communication device 1 through a wireless base station 2. The server 3 in Fig. 1B includes a wireless information collection unit 4 which collects wireless information concerning wireless communication of the other communication device 1, and a congestion degree assessment unit 5 which assesses the degree of congestion of a wireless link on the basis of the collected wireless information. The server 3 in Fig. 1B further includes a scheduling unit 6 which schedules data communication performed with the other communication device on the basis of the assessed degree of congestion.

An operation of the server 3 of the communication system will be described. The wireless information collection unit 4 collects wireless information concerning wireless communication of the other communication device 1. Further, the congestion degree assessment unit 5 assesses the degree of congestion of a wireless link on the basis of the collected wireless information. The scheduling unit 6 schedules data communication performed with the other communication device on the basis of the assessed degree of congestion.

Thus, the communication device and the communication system according to the example embodiment enable efficient data communication in a situation where the degree of congestion of a wireless link changes in a short period.

Further, in the communication system according to the present example embodiment, the server 3, which delivers data, determines the timing of communication performed with the other communication device 1 by taking into consideration wireless information concerning wireless communication of the other communication device 1. The server 3 controls the number of concurrent communication sessions in accordance with the load on the wireless link to improve the efficiency of utilization of available resources by a plurality of off-peak communication sessions. Here, off-peak communication refers to data communication attempted during a period of time in which a low load is placed on the link.

When other individual communication devices 1 autonomously determine the timing of communication and attempt to perform data communication, a communication load may concentrate on a wireless link. In the communication system according to the present example embodiment, in contrast, the server 3 which delivers data determines the timing of communication performed with other terminal devices and the server 3 controls the number of concurrent communication sessions in accordance with the load on the wireless communication link. This enables improvement of the efficiency of utilization of available wireless resources among a plurality of off-peak communication sessions. Specific example embodiments of the present invention will be described below in detail with reference to the drawings.

[First Example Embodiment]

A communication system, a communication device and a communication method according to a first example embodiment of the present invention will be described first.

[Description of Configuration]

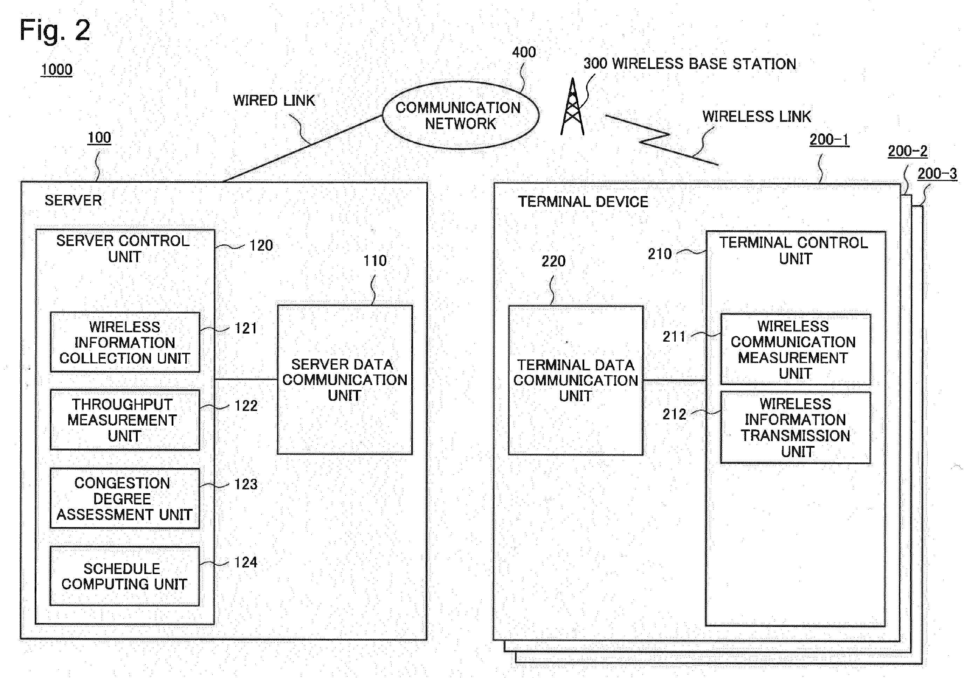

Fig. 2 is a block diagram illustrating a configuration of a communication system 1000 according to the first example embodiment of the present invention. As illustrated in Fig. 2, the communication system 1000 according to the first example embodiment includes a server 100, a plurality of terminal devices 200-1, 200-2 and 200-3, and a wireless base station 300 which connects the terminal devices 200 to a communication network 400 through a wireless link. The communication network 400 is connected to each of the server 100 and the terminal devices 200. The communication network 400 is a network for communication such as the Internet. Note that in the following description, the plurality of terminal devices 200-1, 200-2 and 200-3 will be collectively referred to as terminal devices 200 unless there is a need to particularly distinguish among the individual terminal devices 200-1, 200-2 and 200-3.

A detailed configuration of the server 100 will be described first with reference to Fig. 2. The server 100 includes a server data communication unit 110 and a server control unit 120. The server data communication unit 110 is connected to the server control unit 120.

The server 100 is connected to the communication network 400 through a wired link. Note that the server 100 may be connected to the communication network 400 through a wireless link. The server 100 is connected to the terminal devices 200 through the communication network 400. The server 100 performs data communication with the terminal devices 200 through the communication network 400.

The server data communication unit 110 performs data communication with a terminal data communication unit 220 of each of the terminal devices 200. Specifically, the server data communication unit 110 sends data to the terminal data communication unit 220 of the terminal device 200 through the communication network 400. The server data communication unit 110 receives data sent from the terminal data communication unit 220 of the terminal device 200 through the communication network 400.

The server control unit 120 includes a wireless information collection unit 121, a throughput measurement unit 122, a congestion degree assessment unit 123 and a schedule computing unit 124.

The server control unit 120 controls the entire server 100. Further, the server control unit 120 receives various kinds of information (for example, the amounts of information and data and communication time) concerning data sent and received by the server data communication unit 110.

The wireless information collection unit 121 collects information concerning wireless communication from the terminal devices 200. The information concerning wireless communication may include Received Signal Strength Indicator (RSSI), Reference Signal Received Power (RSRP), Reference Signal Received Quality (RSRQ), and Signal-to-Interference plus Noise-Ratio (SINR), for example.

The throughput measurement unit 122 measures the throughput of data communication performed with each of the terminal devices 200.

The congestion degree assessment unit 123 assesses the degree of link congestion on the basis of wireless information and throughput.

The schedule computing unit 124 schedules data communication performed with the terminal devices 200 on the basis of the degree of congestion.

Each of the terminal devices 200 includes a wireless communication measurement unit 211 and a wireless information transmission unit 212. A terminal control unit 210 is connected to a terminal data communication unit 220.

Each of the terminal devices 200 is connected to the communication network 400 through a wireless link of the wireless base station 300. Each of the terminal devices 200 is connected to the server 100 through the communication network 400. The terminal devices 200 perform data communication with the server 100 through the communication network 400. While the three terminal devices 200 are illustrated herein, there may be two terminal devices or four or more terminal devices 200. Further, there may be only one terminal device 200.

The terminal control unit 210 controls the entire terminal device 200. The terminal control unit 210 includes a wireless communication measurement unit 211 and a wireless information transmission unit 212. The terminal data communication unit 220 sends data to the server data communication unit 110 of the server 100 through the communication network 400. Further, the terminal data communication unit 220 receives data sent from the server data communication unit 110 of the server 100 through the communication network 400.

The wireless communication measurement unit 211 collects information concerning wireless communication on the wireless link of the wireless base station 300. The information concerning wireless communication may include Received Signal Strength Indicator (RSSI), Reference Signal Received Power (RSRP), Reference Signal Received Quality (RSRQ) and Signal-to-Interference plus Noise-Ratio (SINR), for example.

The wireless information transmission unit 212 sends the information concerning wireless communication on the above-described terminal device 200 to the wireless information collection unit 121 of the server 100 through the terminal data communication unit 220, the communication network 400, and the server data communication unit 110.

[Description of Operations]

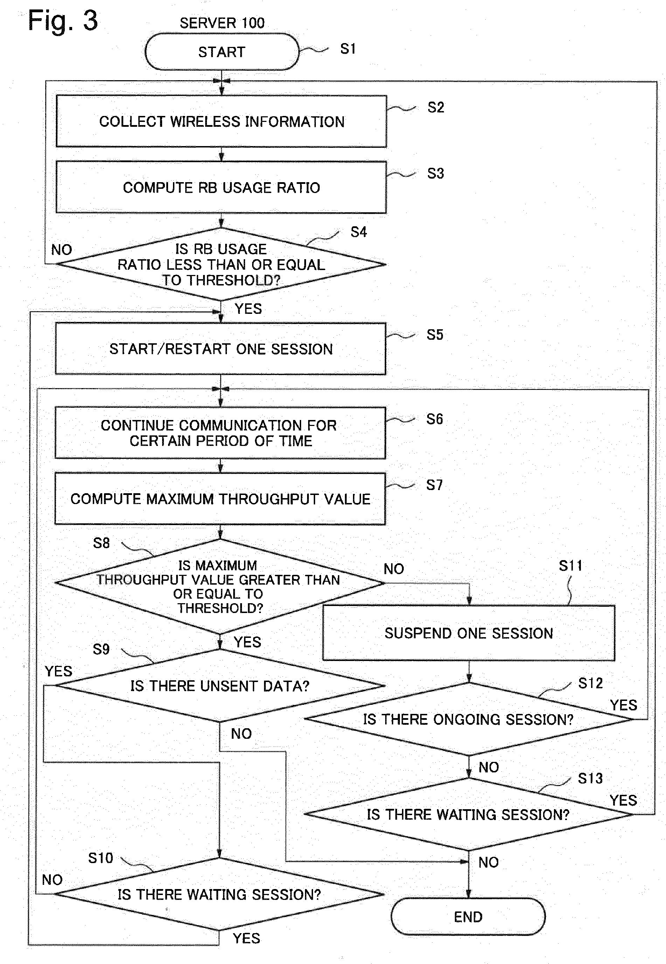

Operations of the wireless communication system 1000 including the server 100 and the terminal devices 200 will be described next with reference to Fig. 3. Fig. 3 is a flowchart for describing an operation of the server 100 according to the first example embodiment of the present invention.

It is assumed here that the terminal devices 200-1, 200-2 and 200-3 perform data communication with the server 100 during a period of time in which the degree of congestion of the communication link is low.

For example, when a communication request is issued from a terminal device 200 to the server 100 in response to a user operation on the terminal device 200, the server 100 starts the operation (step S1). The wireless information collection unit 121 of the server 100 collects information concerning wireless communication from the wireless information transmission unit 212 of the terminal device 200 at regular intervals (step S2). The information concerning wireless communication may be information such as Received Signal Strength Indicator (RSSI), Reference Signal Received Power (RSRP), Reference Signal Received Quality (RSRQ), and Signal-to-Interference plus Noise-Ratio (SINR), for example.

The wireless information collection unit 121 of the server 100 then computes a resource block (RB) usage ratio of the wireless base station 300 from the collected information concerning wireless communication (step S3). RB is the minimum unit of allocation of wireless resources and the RB usage ratio is the number of RBs used divided by the total number of allocatable RBs. The RB usage ratio represents the degree of usage of communication resources allocated to terminal devices 200 connected to the communication network as a value from 0.0 to 1.0, for example.

The RB usage ratio NC1 may be computed using items of information concerning wireless communication, RSSI, RSRP and SINR mentioned above in accordance with Formula (1) given below.

[Equation 1]

$$NC1 = \left( \frac{RSSI}{2 \times RSRP \times 50} - \frac{6}{SINR} - 1 \right) \times \frac{1}{5} \quad \cdots \cdots \quad (1)$$

Alternatively, the RB usage ratio NC 1 may be computed in accordance with Formula (2) given below.

[Equation 2]

$$NC1 = \left( \frac{1}{2 \times RSRQ} - \frac{6}{SINR} - 1 \right) \times \frac{1}{5} \quad \cdots \cdots \quad (2)$$

The wireless information collection unit 121 of the server 100 may compute a moving average as the RB usage ratio NC 1. Alternatively, the wireless information collection unit 121 of the server 100 may compute an exponential smoothed value as the RB usage ratio NC 1.

Then, the congestion degree assessment unit 123 of the server 100 determines whether or not the RB usage ratio NC1 is less than or equal to a preset threshold (step S4). When the RB usage ratio NC1 is less than or equal to the threshold (YES at step S4), the process proceeds to step S5; otherwise, the process proceeds to step S2. When the RB usage ratio NC1 is less than or equal to the threshold, the server 100 starts communication with the terminal device 200-1 (step S5). The server 100 further continues communication with the terminal device 200-1 for a certain period of time (step S6).

Then, the throughput measurement unit 122 of the server 100 measures the communication throughput of each communication session currently being performed and computes the maximum throughput value (step S7). Then the congestion degree assessment unit 123 of the server 100 determines whether or not the maximum throughput value computed by the throughput measurement unit 122 is larger than or equal to a threshold (step S8). When the maximum throughput value is larger than or equal to the threshold (YES at step S8), the process proceeds to step S9; otherwise, the process proceeds to step S11.

When the maximum throughput value is larger than or equal to the threshold, the schedule computing unit 124 of the server 100 determines whether or not there is unsent data for any of the terminal devices 200-1, 200-2 and 200-3 (step S9). When there is unsent data (YES at step S9), the process proceeds to step 10; otherwise, the data communication ends.

When there is unsent data, the schedule computing unit 124 of the server 100 determines whether or not there is a waiting session (step S10). When there is a waiting session (YES at step S10), the process returns to step S5, where the server 100 restarts a communication session; otherwise, the process returns to step S6, where the server 100 continues the communication with the terminal device 200-1 for a certain period of time.

When the maximum throughput value computed by the throughput measurement unit 122 is less than the threshold (NO at step S8), the schedule computing unit 124 of the server 100 considers that the communication link is congested and suspends one communication session (step S11). After the suspension, the schedule computing unit 124 determines whether or not there is an ongoing session. When there is no ongoing session (NO at step S12), the process proceeds to step S13; otherwise, the process returns to step S6, where the communication is continued for a certain period of time. When there is no ongoing session at step S12, the schedule computing unit 124 determines whether or not there is a waiting session (step S13). When there is a waiting session, the process returns to step S2; otherwise, the data communication ends.

[Description of Advantageous Effects]

As described above, the communication system according to the present example embodiment is capable of starting, suspending and restarting data communication in accordance with changes in the degree of congestion of the communication link. Further, the communication system is capable of controlling the number of data communication sessions in accordance with changes in the degree of congestion of the communication link.

More specifically, the resource block RB usage ratio of the wireless base station 300 is computed and, when the computed RB usage ratio exceeds a threshold, wireless information is collected again; when the computed RB usage ratio is less than or equal to the threshold, one session is started. In this way, data communication can be started in accordance with changes in the degree of link congestion.

Further, in the communication system according to the present example embodiment, the server 100, which delivers data, determines the timing of communication with terminal devices 200 (200-1, 200-2, 200-3, ...) by taking into consideration the resource block RB usage ratio and the maximum throughput value. Since the server 100 controls the number of concurrent communication sessions in accordance with the load on the communication link, the efficiency of utilization of available wireless resources by a plurality of off-peak communication sessions can be improved.

When individual terminal devices 200 autonomously determine the timing of communication and attempt to perform data communication, a communication load may concentrate on a wireless link. In the communication system according to the present example embodiment, in contrast, the server 100, which delivers data, determines the timing of communication performed with terminal devices 200 and the server 100 controls the number of concurrent communication sessions in accordance with the load on a wireless communication link. This enables improvement of the efficiency of utilization of available wireless resources by a plurality of off-peak communication sessions.

[Second Example Embodiment]

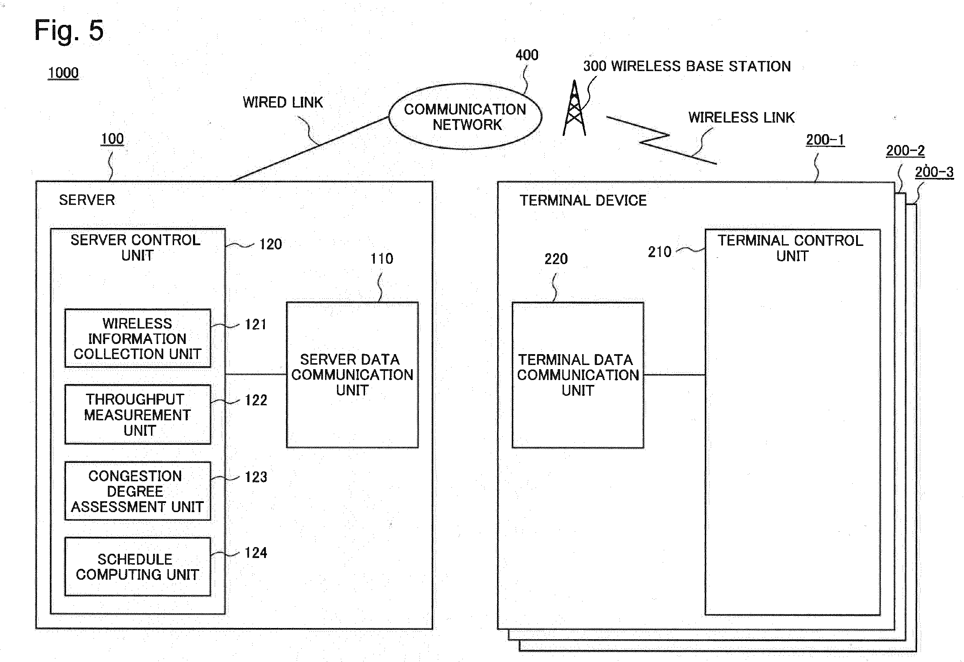

A communication system, a communication device and a communication method according to a second example embodiment of the present invention will be described next. Fig. 5 is a block diagram illustrating a configuration of a wireless communication system according to the second example embodiment of the present invention.

In the present example embodiment, unlike in the first example embodiment, a wireless information collection unit 121 of a server 100 acquires resource block (RB) usage ratio NC 1 directly from a wireless base station 300. The same components as components of the first example embodiment are given the same reference numerals and detailed description of those components will be omitted.

As illustrated in Fig. 5, a communication system 1000 according to the second example embodiment includes a server 100, a plurality of terminal devices 200-1, 200-2 and 200-3, and a wireless base station 300 which connects the terminal devices 200 to a communication network 400. The communication network 400 is connected to the server 100 and the terminal device 200, respectively. The communication network 400 is a network for communication such as the Internet. Note that in the following description, the plurality of terminal devices 200-1, 200-2 and 200-3 will be collectively referred to as terminal devices 200 unless there is a need to particularly distinguish among the individual terminal devices 200-1, 200-2 and 200-3.

As illustrated in Fig. 5, the server 100 includes a server data communication unit 110 and a server control unit 120. The server data communication unit 110 is connected to the server control unit 120.

The server 100 is connected to the communication network 400 through a wired link. Note that the server 100 may be connected to the communication network 400 through a wireless link. The server 100 is connected to the terminal devices 200 through the communication network 400. The server 100 performs data communication with the terminal devices 200 through the communication network 400.

The server data communication unit 110 performs data communication with a terminal data communication unit 220 of each of the terminal devices 200 through the communication network 400. Specifically, the server data communication unit 110 sends data to the terminal data communication unit 220 of the terminal device 200 through the communication network 400. The server data communication unit 110 receives data sent from the terminal data communication unit 220 of the terminal device 200 through the communication network 400.

The server control unit 120 includes a wireless information collection unit 121, a throughput measurement unit 122, a congestion degree assessment unit 123 and a schedule computing unit 124.

The server control unit 120 controls the entire server 100. Further, the server control unit 120 receives various kinds of information (for example, the amounts of information and data, and communication time) concerning data sent and received by the server data communication unit 110.

The wireless information collection unit 121 acquires a resource block (RB) usage ratio NC1 directly from the wireless base station 300. The throughput measurement unit 122 measures the throughput of data communication performed with the terminal devices 200.

The congestion degree assessment unit 123 assesses the degree of link congestion from the RB usage ratio and the throughput.

The schedule computing unit 124 schedules data communication performed with the terminal devices 200 on the basis of the degree of congestion.

Each of the terminal devices 200 includes a terminal control unit 210 and a terminal data communication unit 220. The terminal control unit 210 is connected to the terminal data communication unit 220.

Each of the terminal devices 200 is connected to the communication network 400 through a wireless link of the wireless base station 300. Each of the terminal devices 200 is connected to the server 100 through the communication network 400. The terminal devices 200 perform data communication with the server 100 through the communication network 400. While the three terminal devices 200 are illustrated herein, there may be two terminal devices or four or more terminal devices 200. Further, there may be only one terminal device 200.

The terminal control unit 210 controls the entire terminal device 200. The terminal data communication unit 220 sends data to the server data communication unit of the server 100 through the communication network 400. Further, the terminal data communication unit 220 receives data sent from the server data communication unit 110 of the server 100 through the communication network 400.

As in the first example embodiment, the communication system, the communication device and the communication method in the present example embodiment enable data communication to be started, suspended and restarted in accordance with changes in the degree of congestion of the communication link. Further, the communication system, the communication device and the communication method enable control of the number of data communication sessions in accordance with changes in the degree of congestion of the communication link.

Further, according to the present example embodiment, the wireless information collection unit 121 of the server 100 acquires the RB usage ratio NC1 directly from the base station 300. Accordingly, an accurate value of RB usage ratio can be acquired.

[Third Example Embodiment]

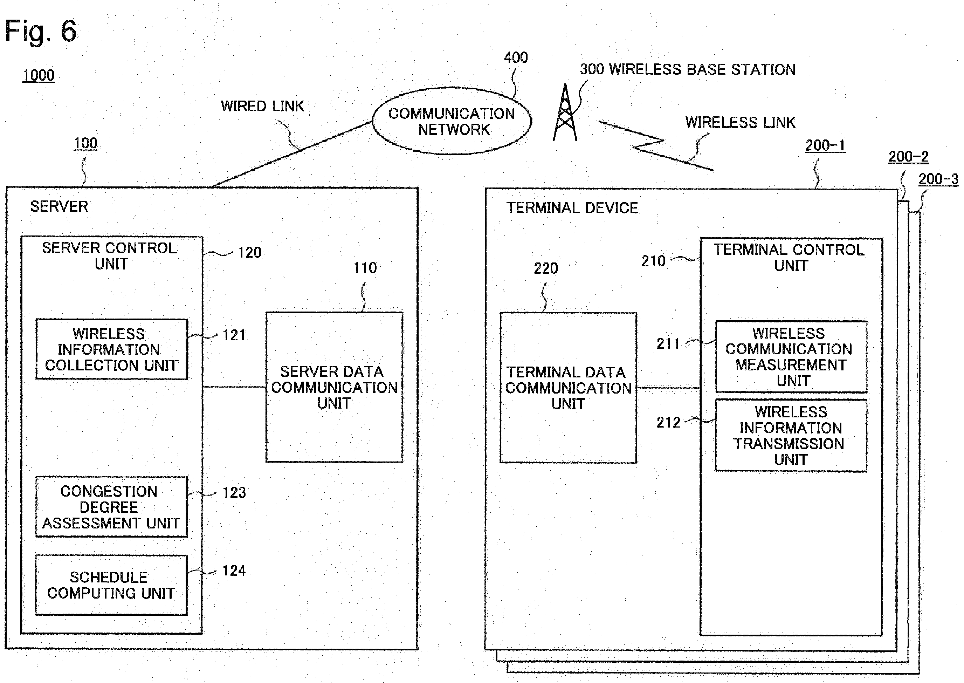

A communication system, a communication device and a communication method according to a third example embodiment of the present invention will be described next. Fig. 6 is a block diagram illustrating a configuration of a communication system according to the third example embodiment of the present invention. The communication system according to the present example embodiment differs from the communication system according to the first example embodiment in that the need for the throughput measurement unit 122 of server control unit 120 is eliminated. In other words, the server control unit 120 of the server 100 in the present example embodiment includes a wireless information collection unit 121 a congestion degree assessment unit 123 and a schedule computing unit 124.

[Description of Operations]

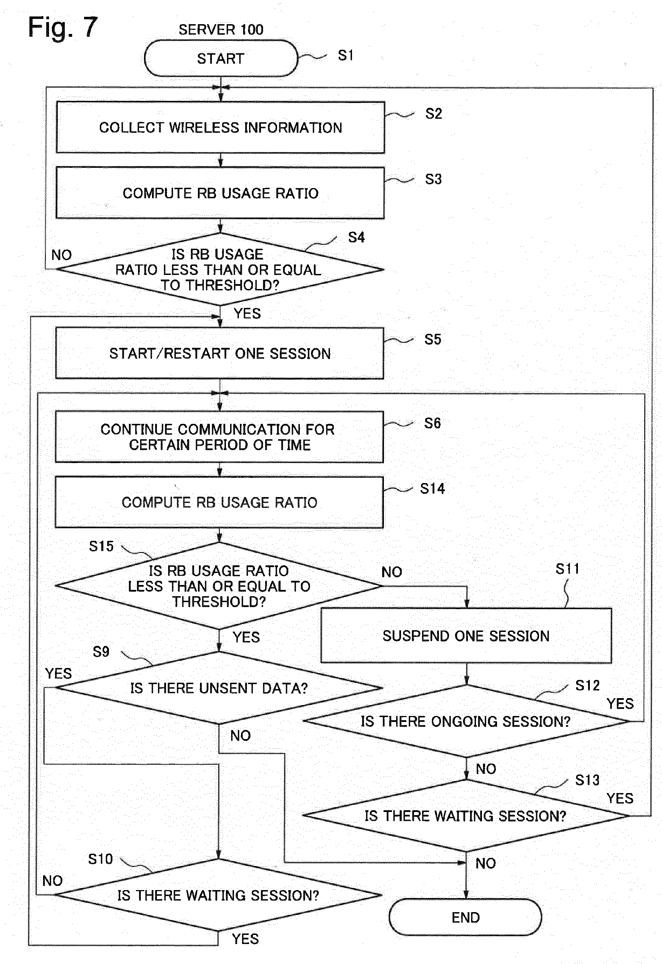

Operations and the communication method according to the present example embodiment will be described. Fig. 7 is a flowchart for explaining an operation of the server 100 according to the present example embodiment. As in the first example embodiment, it is assumed here that terminal devices 200-1, 200-2 and 200-3 perform data communication with the server 100 during a period of time in which the degree of congestion of a communication link is low.

For example, when a communication request is issued from a terminal device 200 to the server 100 in response to a user operation on the terminal device 200, the server 100 starts the operation (step S1). The wireless information collection unit 121 of the server 100 collects information concerning wireless communication from the wireless information transmission unit 212 of the terminal device 200 at regular intervals (step S2). The information concerning wireless communication may be information such as RSSI, RSRP, RSRQ and SINR, for example.

The wireless information collection unit 121 of the server 100 then computes a resource block (RB) usage ratio of the wireless base station 300 from the collected information concerning wireless communication (step S3). RB is the minimum unit of allocation of wireless resources and the RB usage ratio is the number of RBs used divided by the total number of allocatable RBs. The RB usage ratio NC1 can be computed in accordance with Formula (1) or Formula (2) as in the first example embodiment. Alternatively, the wireless information collection unit 121 of the server 100 may compute a moving average as the RB usage ratio NC 1. Alternatively, the wireless information collection unit 121 of the server 100 may compute an exponential smoothed value as the RB usage ratio NC1.

Then, the congestion degree assessment unit 123 of the server 100 determines whether or not the RB usage ratio NC1 is less than or equal to a preset threshold (step S4). When the RB usage ratio NC1 is less than or equal to the threshold (YES at step S4), the process proceeds to step S5; otherwise, the process proceeds to step S2. When the RB usage ratio NC1 is less than or equal to the threshold, the server 100 starts communication with the terminal device 200-1 (step S5). The server 100 further continues communication with the terminal device 200-1 for a certain period of time (step S6).

Further, the wireless information collection unit 121 of the server 100 collects information concerning wireless communication and computes the resource block (RB) usage ratio of the wireless base station 300 from the collected information concerning wireless communication (step S14).

Then, the congestion degree assessment unit 123 of the server 100 determines whether or not the RB usage ratio computed by the wireless information collection unit 121 is less than or equal to a threshold (step S15). If the computed RB usage ratio is less than or equal to the threshold (YES at step S15), the process proceeds to step S9; otherwise, the process proceeds to step S11.

The rest of the process is similar to the operation in the first example embodiment. In other words, when the computed RB usage ratio is less than or equal to the threshold, a schedule computing unit 124 of the server 100 determines whether or not there is unsent data for any of the terminal devices 200-1, 200-2 and 200-3 (step S9). When there is unsent data (YES at step S9), the process proceeds to step S10; otherwise, the data communication ends.

When there is unsent data, the schedule computing unit 124 determines whether or not there is a waiting session (step S10). When there is a waiting session (YES at step S10), the process returns to step S5, where the server 100 restarts a communication session; otherwise, the process returns to step S6, where the server 100 continues the communication with the terminal device 200-1 for a certain period of time.

If the RB usage ratio exceeds the threshold (NO at step S15), the schedule computing unit 124 of the server 100 considers that the communication link is congested and suspends one communication session (step S11). After the suspension, the schedule computing unit 124 determines whether or not there is an ongoing session. When there is no ongoing session (NO at step S12), the process proceeds to step S13; otherwise, the process returns to step S6, where the communication is continued again for a certain period of time. When there is no ongoing session at step S12, the schedule computing unit 124 determines whether or not there is a waiting session (step S13). When there is a waiting session, the process returns to step S2; otherwise, the data communication ends.

[Description of Advantageous Effects]

As in the first example embodiment, the communication system, the communication device and the communication method in the present example embodiment enable data communication to be started, suspended and restarted in accordance with changes in the degree of congestion of the communication link. Further, the communication system, the communication device and the communication method enable control of the number of data communication sessions in accordance with changes in the degree of congestion of the communication link. In addition, in the communication system according to the present example embodiment, the RB usage ratio, instead of throughput, is used to make determination at steps S14, S15. This enables data communication with a terminal device 200 to be scheduled/rescheduled in accordance with changes in the degree of communication link congestion to efficiently perform data communication in a situation where the degree of communication congestion changes in a period shorter than the waiting time.

[Fourth Example Embodiment]

A communication system, a communication device and a communication method according to a fourth example embodiment of the present invention will be described next. The present example embodiment is a variation of the first example embodiment and the communication system and the communication device have the same configurations as the communication system and the communication device according to the first example embodiment but the communication method differs from the communication method of the first example embodiment. Since the communication system and the communication device have the same configurations as those of the communication system and the communication device according to the first example embodiment, the description thereof will be omitted.

[Description of Operations]

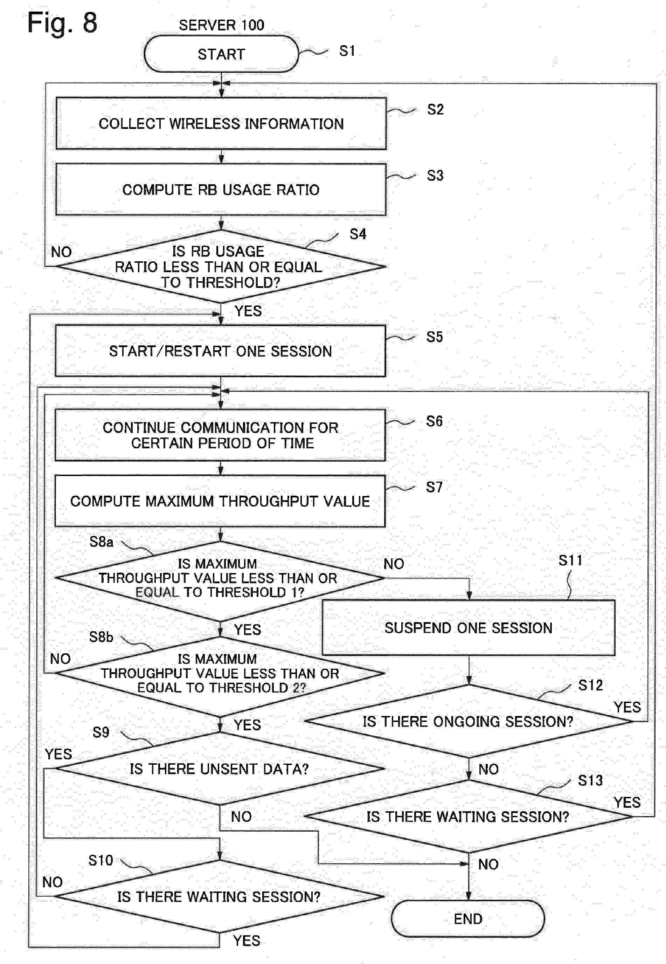

Operations and the communication method according to the present example embodiment will be described. Fig. 8 is a flowchart for explaining an operation of a server 100 according to the present example embodiment. As in the first example embodiment, it is assumed here that terminal devices 200-1, 200-2 and 200-3 perform data communication with the server 100 during a period of time in which the degree of congestion of a communication link is low.

For example, when a communication request is issued from a terminal device 200 to the server 100 in response to a user operation on the terminal device 200, the server 100 starts the operation (step S1). A wireless information collection unit 121 of the server 100 collects information concerning wireless communication from a wireless information transmission unit 212 of the terminal device 200 at regular intervals (step S2). The information concerning wireless communication may be information such as RSSI, RSRP, RSRQ, and SINR, for example.

The wireless information collection unit 121 of the server 100 then computes a resource block (RB) usage ratio of the wireless base station 300 from the collected information concerning wireless communication (step S3). RB is the minimum unit of allocation of wireless resources and the RB usage ratio is the number of RBs used divided by the total number of allocatable RBs. The RB usage ratio NC1 can be computed in accordance with Formula (1) or Formula (2) as in the first example embodiment. Alternatively, the wireless information collection unit 121 of the server 100 may compute a moving average as the RB usage ratio NC 1. Alternatively, the wireless information collection unit 121 of the server 100 may compute an exponential smoothed value as the RB usage ratio NC1.

Then, a congestion degree assessment unit 123 of the server 100 determines whether or not the RB usage ratio NC1 is less than or equal to a preset threshold (step S4). When the RB usage ratio NC1 is less than or equal to the threshold (YES at step S4), the process proceeds to step S5; otherwise, the process proceeds to step S2. When the RB usage ratio NC1 is less than or equal to the threshold, the server 100 starts communication with the terminal device 200-1 (step S5). Further, the server 100 continues communication with the terminal device 200-1 for a certain period of time (step S6).

Then, as in the first example embodiment, a throughput measurement unit 122 of the server 100 measures the communication throughput of each communication session currently being performed and computes the maximum throughput value (step S7).

Then, a congestion degree assessment unit 123 of the server 100 in the present example embodiment determines whether or not the maximum throughput value computed by the throughput measurement unit 122 is less than or equal to threshold 1 (step S8a). If the maximum throughput value is less than or equal to threshold 1 (YES at step S8a), the process proceeds to step S8b; otherwise, the process proceeds to step S11.

When the maximum throughput value is less than or equal to threshold 1, the congestion degree assessment unit 123 of the server 100 determines whether or not the maximum throughput value computed by the throughput measurement unit 122 is less than or equal to threshold 2 (step S8b). If the maximum throughput value is less than or equal to threshold 2 (YES at step S8b), the process proceeds to step S9. If the maximum throughput value exceeds threshold 2 (NO at step S8b), the process returns to step S6, where the communication is continued for a certain period of time (step S6).

The rest of the process is similar to the operation in the first example embodiment. In other words, the schedule computing unit 124 of the server 100 determines whether or not there is unsent data for any of the terminal devices 200-1, 200-2 and 200-3 (step S9). If there is unsent data (YES at step S9), the process proceeds to step S10; otherwise, the data communication ends.

When there is unsent data, the schedule computing unit 124 determines whether or not there is a waiting session (step S10). When there is a waiting session (YES at step S10), the process returns to step S5, where the server 100 restarts a communication session; otherwise, the process returns to step S6, where the server 100 continues the communication with the terminal device 200-1 for a certain period of time.

When the maximum throughput value computed by the throughput measurement unit 122 exceeds threshold 1 (NO at step S8a), the schedule computing unit 124 of the server 100 suspends one communication session (step S11). After the suspension, the schedule computing unit 124 determines whether or not there is an ongoing session. When there is no ongoing session (NO at step S12), the process proceeds to step S13; otherwise, the process returns to step S6, where the communication is continued again for a certain period of time. When there is no ongoing session at step S12, the schedule computing unit 124 determines whether or not there is a waiting session (step S13). When there is a waiting session, the process returns to step S2; otherwise, the data communication ends.

[Description of Advantageous Effects]

As in the first example embodiment, the communication system, the communication device and the communication method in the present example embodiment enable data communication to be started, suspended and restarted in accordance with changes in the degree of congestion of the communication link. Further, the communication system, the communication device and the communication method enable control of the number of data communication sessions in accordance with changes in the degree of congestion of the communication link.

Further, according to the present example embodiment, when the maximum throughput value is less than or equal to threshold 1 but exceeds threshold 2, the process returns to step S6 and communication is continued for a certain period of time. Thus, when the degree of communication link congestion is moderate, the operation can be performed so as to maintain the communication state.

[Fifth Example Embodiment]

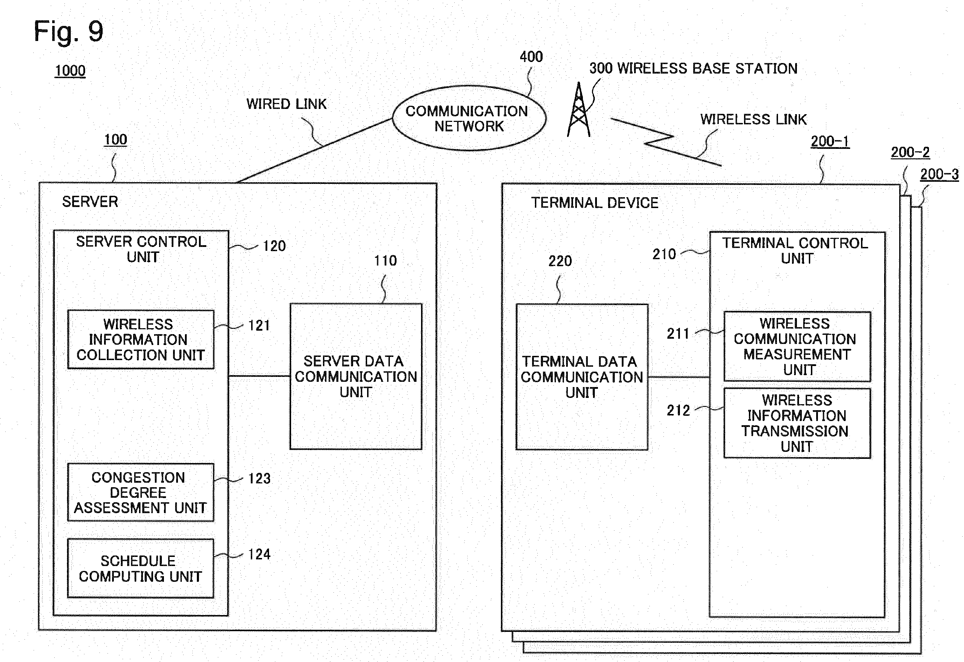

A communication system, a communication device and a communication method according to a fifth example embodiment of the present invention will be described next. Fig. 9 is a block diagram illustrating a configuration of a communication system according to the fifth example embodiment of the present invention. The communication system according to the present example embodiment differs from the communication system according to the first example embodiment in that the need for the throughput measurement unit 122 of server control unit 120 is eliminated. In other words, the server control unit 120 of the server 100 in the present example embodiment includes a wireless information collection unit 121 a congestion degree assessment unit 123 and a schedule computing unit 124, as in the third example embodiment.

[Description of Operations]

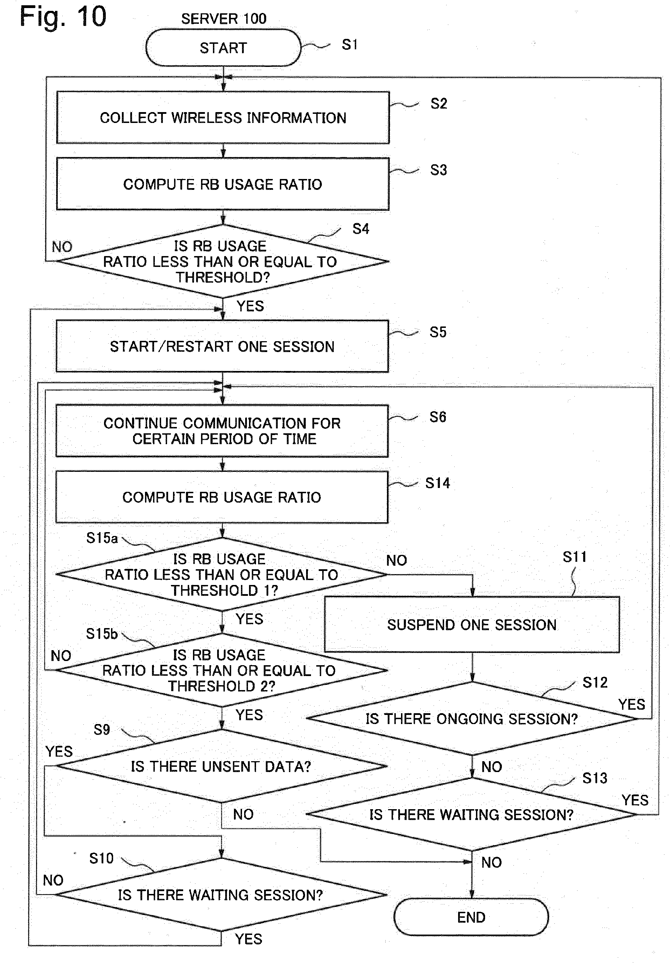

Operations and the communication method according to the present example embodiment will be described. Fig. 10 is a flowchart for explaining an operation of the server 100 according to the present example embodiment. As in the first and third example embodiments, it is assumed here that terminal devices 200-1, 200-2 and 200-3 perform data communication with the server 100 during a period of time in which the degree of congestion of a communication link is low.

For example, when a communication request is issued from a terminal device 200 to the server 100 in response to a user operation on the terminal device 200, the server 100 starts the operation (step S1). The wireless information collection unit 121 of the server 100 collects information concerning wireless communication from a wireless information transmission unit 212 of the terminal device 200 at regular intervals (step S2). The information concerning wireless communication may be information such as RSSI, RSRP, RSRQ, and SINR, for example.

The wireless information collection unit 121 of the server 100 then computes a resource block (RB) usage ratio of the wireless base station 300 from the collected information concerning wireless communication (step S3). RB is the minimum unit of allocation of wireless resources and the RB usage ratio is the number of RBs used divided by the total number of allocatable RBs. The RB usage ratio NC1 can be computed in accordance with Formula (1) or Formula (2) as in the first example embodiment. Alternatively, the wireless information collection unit 121 of the server 100 may compute a moving average as the RB usage ratio NC 1. Alternatively, the wireless information collection unit 121 of the server 100 may compute an exponential smoothed value as the RB usage ratio NC1.

Then, the congestion degree assessment unit 123 of the server 100 determines whether or not the RB usage ratio NC1 is less than or equal to a preset threshold (step S4). When the RB usage ratio NC1 is less than or equal to the threshold (YES at step S4), the process proceeds to step S5; otherwise, the process proceeds to step S2. When the RB usage ratio NC1 is less than or equal to the threshold, the server 100 starts communication with the terminal device 200-1 (step S5). The server 100 further continues communication with the terminal device 200-1 for a certain period of time (step S6).

Further, the wireless information collection unit 121 of the server 100 collects information concerning wireless communication and computes the resource block (RB) usage ratio of the wireless base station 300 from the collected information concerning wireless communication (step S14).

Then, the congestion degree assessment unit 123 of the server 100 determines whether or not the RB usage ratio computed by the wireless information collection unit 121 is less than or equal to threshold 1 (step S15a). When the computed RB usage ratio is less than or equal to threshold 1 (YES at step S15a), the process proceeds to step S15b; otherwise, the process proceeds to step S11.

When the computed RB usage ratio is less than or equal to threshold 1, the congestion degree assessment unit 123 of the server 100 determines whether or not the RB usage ratio computed by the wireless information collection unit 121 is less than or equal to threshold 2 (step S15b). When the RB usage ratio is less than or equal to threshold 2 (YES at step S15b), the process proceeds to step S9.

The rest of the process is similar to the operation in the third example embodiment. In other words, when the computed RB usage ratio is less than or equal to threshold 2, the schedule computing unit 124 determines whether or not there is unsent data for any of the terminal devices 200-1, 200-2 and 200-3 (step S9). When there is unsent data (YES at step S9), the process proceeds to step S10; otherwise, the data communication ends.

When there is unsent data, the schedule computing unit 124 determines whether or not there is a waiting session (step S10). When there is a waiting session (YES at step S10), the process returns to step S5, where the server 100 restarts a communication session; otherwise, the process returns to step S6, where the server 100 continues the communication with the terminal device 200-1 for a certain period of time.

When the RB usage ratio computed by the wireless information collection unit 121 exceeds threshold 1 (NO at step S15a), the schedule computing unit 124 of the server 100 suspends one communication session (step S11). After the suspension, the schedule computing unit 124 determines whether or not there is an ongoing session. When there is no ongoing session (NO at step S12), the process proceeds to step S13; otherwise, the process returns to step S6, where the communication is continued again for a certain period of time. When there is no ongoing session at step S12, the schedule computing unit 124 determines whether or not there is a waiting session (step S13). When there is a waiting session, the process returns to step S2; otherwise, the data communication ends.

[Description of Advantageous Effects]

As in the first example embodiment, the communication system, the communication device and the communication method in the present example embodiment enable data communication to be started, suspended and restarted in accordance with changes in the degree of congestion of the communication link. Further, the communication system, the communication device and the communication method enable control of the number of data communication sessions in accordance with changes in the degree of congestion of the communication link.

In addition, according to the present example embodiment, the RB usage ratio, instead of throughput, is used to make determination at steps S15a and S15b. This enables data communication with a terminal device 200 to be scheduled/rescheduled in accordance with changes in the RB usage ratio to efficiently perform data communication in a situation where the degree of communication congestion changes in a period shorter than the waiting time.

Further, when the RB usage ratio is less than or equal to threshold 1 but exceeds threshold 2, the process returns to step S6 and communication is continued for a certain period of time. Thus, when the degree of communication link congestion is moderate, the operation can be performed so as to maintain the communication state.

[Other Example Embodiments]

The communication systems, communication devices and communication methods according to the example embodiments of the present invention and their variations described above may also be implemented by information processing devices that can execute a program that implements the configurations and operations described above. The program may be distributed in the form of a computer-readable recording medium. The functions of the example embodiments may be implemented as software by reading and executing the program recorded on such a recording medium on information processing devices.

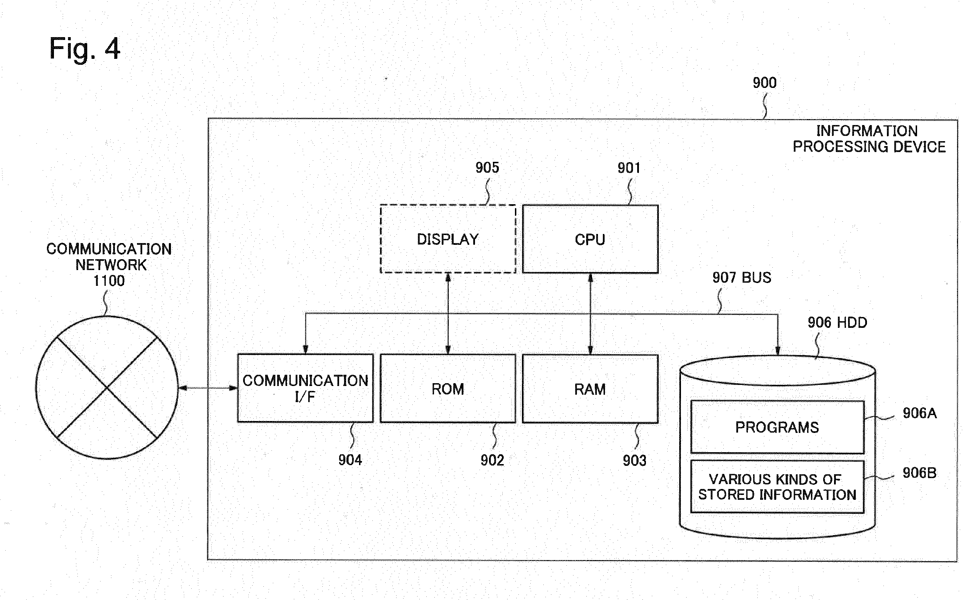

Fig. 4 is a diagram illustrating a configuration of a computer applicable to any of the example embodiments of the present invention and their variations. Note that the directions of arrows in Fig. 4 are illustrative and are not intended to limit the directions of signals between blocks.

As illustrated in Fig. 4, an information processing device 900 includes a Central Processing Unit (CPU) 901, a Read Only Memory (ROM) 902, a Random Access Memory (RAM) 903 and a communication interface 904 (communication I/F 904). The information processing device 900 further includes a display 905 and a Hard Disk Drive (HDD) 906. The HDD 906 holds program group 906A and various kinds of stored information 906B.

The information processing device 900 is connected to a communication network 1100 through the communication I/F 904. The CPU 901, the ROM 902, the RAM 903, the communication I/F 904, the display 905 and the HDD 906 are interconnected through a bus 907.

A server 100 according to any of the example embodiments of the present invention and their variations described above can be implemented by the information processing device 900 that has the hardware configuration described above. Specifically, a part or whole of the server 3 in Fig. 1B can also be implemented by executing a program that fulfills functions equivalent to the functions of the wireless information collection unit 121, the throughput measurement unit 122, the congestion degree assessment unit 123, and the schedule computing unit 124 on the information processing device 900. The program may be distributed in the form of a recording medium on which the program is recorded. The program can be distributed in the form of a general-purpose semiconductor recording device such as Compact Flash (registered trademark; CF) and Secure Digital devices, a magnetic recording medium such as a flexible disk, or an optical recording medium such as a Compact Disc Read Only Memory (CD-ROM).

While preferred embodiments of the present invention have been described above, the present invention is not limited to the embodiments. It would be understood that various variations are possible within the scope of the present invention defined in the Claims and such variations also fall within the scope of the present invention.

A part or all of the example embodiments described above can also be described as, but not limited to, the following Supplementary Notes.

(Supplementary Note 1)

A communication device that performs data communication with another communication device through a wireless base station, the communication device including: a wireless information collection means for collecting wireless information concerning wireless communication of the other communication device; a congestion degree assessment means for assessing the degree of wireless link congestion from the collected wireless information; and a scheduling means for scheduling data communication performed with the other communication device on the basis of the assessed degree of congestion.

(Supplementary Note 2)

The communication device according to Supplementary Note 1, wherein the wireless information collection means computes a usage ratio of wireless resources of the wireless base station from the collected wireless information.

(Supplementary Note 3)

The communication device according to Supplementary Note 2, wherein the wireless information collection means computes a moving average as the usage ratio of the wireless resources of the wireless base station from the collected wireless information.

(Supplementary Note 4)

The communication device according to Supplementary Note 2, wherein the wireless information collection means computes an exponential smoothed value as the usage ratio of the wireless resources of the wireless base station from the collected wireless information.

(Supplementary Note 5)

The communication device according to any one of Supplementary Notes 2 to 4, wherein the congestion degree assessment means determines whether or not the computed usage ratio of the wireless resources is less than or equal to a threshold and, when the computed usage ratio is less than or equal to the threshold, the data communication with the other communication device is continued.

(Supplementary Note 6)

The communication device according to any one of Supplementary Notes 2 to 4, wherein the congestion degree assessment means determines whether or not the computed usage ratio of the wireless resources is less than or equal to a first threshold and, when the usage ratio of the wireless resources is less than or equal to the first threshold, determines whether or not the usage ratio of the wireless resources is less than or equal to a second threshold that is smaller than the first threshold and, when the usage ratio of the wireless resources exceeds the second threshold, the data communication with the other communication device is continued.

(Supplementary Note 7)

The communication device according to any one of Supplementary Notes 1 to 5, further including a throughput measurement means for measuring throughput of data communication performed with the other communication device, wherein the congestion degree assessment means assesses the degree of wireless link congestion from the collected wireless information and a maximum value of the measured throughput.

(Supplementary Note 8)

The communication device according to Supplementary Note 7, wherein the congestion degree assessment means determines whether or not the maximum value of the throughput of data communication performed with the other communication device is larger than or equal to a threshold and, when the maximum value of the through put is larger than or equal to the threshold, the data communication with the other communication device is continued.

(Supplementary Note 9)

The communication device according to Supplementary Note 7, wherein the congestion degree assessment means determines whether or not the maximum value of the throughput of data communication performed with the other communication device is less than or equal to a first threshold and, when the maximum value of the throughput is less than or equal to the first threshold, determines whether or not the maximum value of the throughput is less than or equal to a second threshold that is smaller than the first threshold and, when the maximum value of the throughput exceeds the second threshold, the data communication with the other communication device is continued.

(Supplementary Note 10)

A communication system including a communication device that performs data communication with another communication device through a wireless base station, wherein the communication device includes: a wireless information collection means for collecting wireless information concerning wireless communication of the other communication device; a congestion degree assessment means for assessing the degree of wireless link congestion from the collected wireless information; and a scheduling means for scheduling data communication performed with the other communication device on the basis of the assessed degree of congestion.

(Supplementary Note 11)

The communication system according to Supplementary Note 10, wherein the wireless information collection means of the communication device computes a usage ratio of wireless resources of the wireless base station from the collected wireless information.

(Supplementary Note 12)

The communication system according to Supplementary Note 11, wherein the wireless information collection means of the communication device computes a moving average as the usage ratio of the wireless resources of the wireless base station from the collected wireless information.

(Supplementary Note 13)

The communication system according to Supplementary Note 11, wherein the wireless information collection means of the communication device computes an exponential smoothed value as the usage ratio of the wireless resources of the wireless base station from the collected wireless information.

(Supplementary Note 14)

The communication system according to any one of Supplementary Notes 11 to 13, wherein the congestion degree assessment means of the communication device determines whether or not the computed usage ratio of the wireless resources is less than or equal to a threshold and, when the computed usage ratio is less than or equal to the threshold, the data communication with the other communication device is continued.

(Supplementary Note 15)

The communication system according to any one of Supplementary Notes 11 to 13, wherein the congestion degree assessment means of the communication device determines whether or not the computed usage ratio of the wireless resources is less than or equal to a first threshold and, when the usage ratio of the wireless resources is less than or equal to the first threshold, determines whether or not the usage ratio of the wireless resources is less than or equal to a second threshold that is smaller than the first threshold and, when the usage ratio of the wireless resources exceeds the second threshold, the data communication with the other communication device is continued.

(Supplementary Note 16)

The communication system according to any one of Supplementary Notes 10 to 14, wherein the communication device further includes a throughput measurement means for measuring throughput of data communication performed with the other communication device and the congestion degree assessment means assesses the degree of wireless link congestion from the collected wireless information and a maximum value of the measured throughput.

(Supplementary Note 17)

The communication system according to Supplementary Note 16,
wherein the congestion degree assessment means of the communication device determines whether or not the maximum value of the throughput of data communication performed with the other communication device is larger than or equal to a threshold and, when the maximum value of the through put is larger than or equal to the threshold, the data communication with the other communication device is continued.

(Supplementary Note 18)

The communication system according to Supplementary Note 16, wherein the congestion degree assessment means of the communication device determines whether or not the maximum value of the throughput of data communication performed with the other communication device is less than or equal to a first threshold and, when the maximum value of the throughput is less than or equal to the first threshold, determines whether or not the maximum value of the throughput is less than or equal to a second threshold that is smaller than the first threshold and, when the maximum value of the throughput exceeds the second threshold, the data communication with the other communication device is continued.

(Supplementary Note 19)

A communication method for performing data communication with a communication device through a wireless base station, the communication method including: collecting wireless information concerning wireless communication of the communication device; assessing the degree of wireless link congestion from the collected wireless information; and scheduling data communication performed with the communication device on the basis of the assessed degree of congestion.

(Supplementary Note 20)

The communication method according to Supplementary Note 19,
wherein after collecting the wireless information concerning the wireless communication of the communication device, a usage ratio of wireless resources of the wireless base station is computed from the collected wireless information.

(Supplementary Note 21)

The communication method according to Supplementary Note 20, wherein after collecting the wireless information concerning the wireless communication of the communication device, a moving average is computed as the usage ratio of the wireless resources of the wireless base station.

(Supplementary Note 22)

The communication method according to Supplementary Note 20, wherein after collecting the wireless information concerning the wireless communication of the communication device, an exponential smoothed value is computed as the usage ratio of the wireless resources of the wireless base station.

(Supplementary Note 23)

The communication method according to any one of Supplementary Notes 20 to 22, wherein determination is made as to whether or not the computed usage ratio of the wireless resources is less than or equal to a threshold and, when the computed usage ratio is less than or equal to the threshold, the data communication with the communication device is continued.

(Supplementary Note 24)

The communication method according to any one of Supplementary Notes 20 to 22, wherein determination is made as to whether or not the computed usage ratio of the wireless resources is less than or equal to a first threshold and, when the usage ratio of the wireless resources is less than or equal to the first threshold, determination is made as to whether or not the usage ratio of the wireless resources is less than or equal to a second threshold that is smaller than the first threshold and, when the usage ratio of the wireless resources exceeds the second threshold, the data communication with the communication device is continued.

(Supplementary Note 25)

The communication method according to any one of Supplementary Notes 19 to 23, wherein throughput of data communication performed with the communication device is measured and the degree of congestion of the wireless link is assessed from the collected wireless information and a maximum value of the measured throughput.

(Supplementary Note 26)

The communication method according to Supplementary Note 25, wherein determination is made as to whether or not the maximum value of the throughput of data communication performed with the communication device is larger than or equal to a threshold and, if the maximum value is larger than or equal to the threshold, the data communication with the communication device is continued.

(Supplementary Note 27)

The communication method according to Supplementary Note 25,
wherein determination is made as to whether or not the maximum value of the throughput of data communication performed with the communication device is less than or equal to a first threshold and, when the maximum value of the throughput is less than or equal to the first threshold, determination is made as to whether or not the maximum value of the throughput is less than or equal to a second threshold that is smaller than the first threshold and, when the maximum value of the throughput exceeds the second threshold, the data communication with the communication device is continued.

(Supplementary Note 28)

A computer-readable recording medium on which a program for performing data communication with a communication device through a wireless base station is recorded, the program causing an information processing device to execute: a wireless information collection step of collecting wireless information concerning wireless communication of the communication device; a congestion degree assessment step of assessing the degree of wireless link congestion from the collected wireless information; and a scheduling step of scheduling data communication performed with the communication device on the basis of the assessed degree of congestion.

(Supplementary Note 29)

The computer-readable recording medium on which the program according to Supplementary Note 28 is recorded, wherein the program causes the information processing device to execute, after the wireless information collection step, a usage ratio computing step of computing a usage ratio of wireless resources of the wireless base station from the collected wireless information.

(Supplementary Note 30)

The computer-readable recording medium on which the program according to Supplementary Note 29 is recorded, wherein the program causes the information processing device to execute, after the wireless information collection step, a usage ratio computing step of computing a moving average as the usage ratio of the wireless resources of the wireless base station.

(Supplementary Note 31)

The computer-readable recording medium on which the program according to Supplementary Note 29 is recorded, wherein the program causes the information processing device to execute, after the wireless information collection step, a usage ratio computing step of computing an exponential smoothed value as the usage ratio of the wireless resources of the wireless base station.

(Supplementary Note 32)

The computer-readable recording medium on which the program according to any one of Supplementary Notes 29 to 31 is recorded, wherein the program causes the information processing device to execute a usage ratio assessment step of determining whether or not the computed usage ratio of the wireless resources is less than or equal to a threshold and, when the computed usage ratio is less than or equal to the threshold, continuing the continuing communication with the communication device.

(Supplementary Note 33)

The computer-readable recording medium on which the program according to any one of Supplementary Notes 29 to 31 is recorded, wherein the program causes the information processing device to execute a usage ratio assessment step of determining whether or not the computed usage ratio of the wireless resources is less than or equal to a first threshold and, when the usage ratio of the wireless resources is less than or equal to the first threshold, determining whether or not the usage ratio of the wireless resources is less than or equal to a second threshold that is smaller than the first threshold and, when the usage ratio of the wireless resources exceeds the second threshold, continuing the data communication with the communication device.

(Supplementary Note 34)

The computer-readable recording medium on which the program according to any one of Supplementary Notes 28 to 32 is recorded, wherein the program causes the information processing device to further execute a throughput measurement step of measuring throughput of data communication performed with the communication device, and to assess the degree of wireless link congestion from the collected wireless information and the measured throughput.

(Supplementary Note 35)

The computer-readable recording medium on which the program according to Supplementary Note 34 is recorded, wherein the program causes the information processing device to execute a maximum throughput value assessment step of determining whether or not a maximum value of the throughput of data communication performed with the communication device is larger than or equal to a threshold and, when the maximum value is larger than or equal to the threshold, continuing the data communication with the communication device.

(Supplementary Note 36)

The computer-readable recording medium on which the program according to Supplementary Note 34 is recorded, wherein the program causes the information processing device to execute a maximum throughput value assessment step of determining whether or not the maximum value of the throughput of the data communication performed with the communication device is less than or equal to a first threshold and, when the maximum value of the throughput is less than or equal to the first threshold, determining whether or not the maximum value of the throughput is less than or equal to a second threshold that is smaller than the first threshold and, when the maximum value of the throughput exceeds the second threshold, continuing the data communication with the communication device.

[Industrial Applicability]

The present invention is applicable for the purposes of implementing transmission without interrupting communication on smartphones, mobile phones and the like that requires real-time transmission. For example, such situations may include a situation where non-real-time communication such as download of video contents and periodic information collection from multiple terminals is implemented using network resources such as wireless resources. Further, the present invention is also applicable to a case where a user of an application that does not require real-time transmission trades off real-time transmission for a low communication charge.

The present invention has been described using the example embodiments described above as model examples. However, the present invention is not limited to the example embodiments described above. Various modes of the present invention that can be understood by those skilled in the art can be used within the scope of the present invention.

This application is based upon and claims the benefit of priority from Japanese Patent Application No. 2014-233693, filed on November 18, 2014, the entire disclosure of which is incorporated herein.

[Reference signs List]

| | |
|---|---|
| 1 | Communication device |
| 2, 300 | Wireless base station |
| 4 | Wireless information collection unit |
| 5 | Congestion degree assessment unit |
| 6 | Scheduling unit |
| 3, 100 | Server |
| 110 | Server data communication unit |
| 120 | Server control unit |
| 121 | Wireless information collection unit |
| 122 | Throughput measurement unit |
| 123 | Congestion degree assessment unit |
| 124 | Schedule computing unit |
| 200, 200-1, 200-2, 200-3 | Terminal device |
| 210 | Terminal control unit |
| 211 | Wireless communication measurement unit |
| 212 | Wireless information transmission unit |
| 220 | Terminal data communication unit |
| 400 | Communication network |
| 900 | Information processing device |
| 901 | CPU |
| 902 | ROM |
| 903 | RAM |
| 904 | Communication I/F |
| 905 | Display |
| 906 | HDD |
| 906A | Program group |
| 906B | Various kinds of stored information |
| 907 | Bus |
| 1000 | Communication system |
| 1100 | Communication network |

**Claims**

1. A communication device that performs data communication with another communication device through a wireless base station, the communication device including:

 a wireless information collection means for collecting wireless information concerning wireless communication of the other communication device; a congestion degree assessment means for assessing the degree of wireless link congestion from the collected wireless information; and a scheduling means for scheduling data communication performed with the other communication device on the basis of the assessed degree of congestion.

2. The communication device according to Claim 1,
 wherein the wireless information collection means computes a usage ratio of wireless resources of the wireless base station from the collected wireless information.

3. The communication device according to Claim 2,
 wherein the wireless information collection means computes a moving average as the usage ratio of the wireless resources of the wireless base station from the collected wireless information.

4. The communication device according to Claim 2,
wherein the congestion degree assessment means determines whether or not the computed usage ratio of the wireless resources is less than or equal to a first threshold and, when the usage ratio of the wireless resources is less than or equal to the first threshold, determines whether or not the usage ratio of the wireless resources is less than or equal to a second threshold that is smaller than the first threshold and, when the usage ratio of the wireless resources exceeds the second threshold, the data communication with the other communication device is continued.

5. The communication device according to any one of Claims 1 to 3, further including a throughput measurement means for measuring throughput of data communication performed with the other communication device,
wherein the congestion degree assessment means assesses the degree of wireless link congestion from the collected wireless information and a maximum value of the measured throughput.

6. The communication device according to Claim 5,
wherein the congestion degree assessment means determines whether or not the maximum value of the throughput of data communication performed with the other communication device is larger than or equal to a threshold and, when the maximum value of the through put is larger than or equal to the threshold, the data communication with the other communication device is continued.

7. The communication device according to Claim 5,
wherein the congestion degree assessment means determines whether or not the maximum value of the throughput of data communication performed with the other communication device is less than or equal to a first threshold and, when the maximum value of the throughput is less than or equal to the first threshold, determines whether or not the maximum value of the throughput is less than or equal to a second threshold that is smaller than the first threshold and, when the maximum value of the throughput exceeds the second threshold, the data communication with the other communication device is continued.

8. A communication system including a communication device that performs data communication with another communication device through a wireless base station,
wherein the communication device includes: a wireless information collection means for collecting wireless information concerning wireless communication of the other communication device; a congestion degree assessment means for assessing the degree of wireless link congestion from the collected wireless information; and a scheduling means for scheduling data communication performed with the other communication device on the basis of the assessed degree of congestion.

9. A communication method for performing data communication with a communication device through a wireless base station, the communication method including:

collecting wireless information concerning wireless communication of the communication device; assessing the degree of wireless link congestion from the collected wireless information; and scheduling data communication performed with the communication device on the basis of the assessed degree of congestion.

10. A computer-readable recording medium on which a program for performing data communication with a communication device through a wireless base station is recorded, the program causing an information processing device to execute:

a wireless information collection step of collecting wireless information concerning wireless communication of the communication device; a congestion degree assessment step of assessing the degree of wireless link congestion from the collected wireless information; and a scheduling step of scheduling data communication performed with the communication device on the basis of the assessed degree of congestion.

# Fig. 1A

```
┌──────────────────────────────────────┐
│                                        │
│    ┌─────────────────────┐             │
│    │      WIRELESS       │ ～ 4        │
│    │    INFORMATION      │             │
│    │  COLLECTION UNIT    │             │
│    └─────────────────────┘             │
│                                        │
│    ┌─────────────────────┐             │
│    │     CONGESTION      │ ～ 5        │
│    │       DEGREE        │             │
│    │  ASSESSMENT UNIT    │             │
│    └─────────────────────┘             │
│                                        │
│    ┌─────────────────────┐             │
│    │     SCHEDULING      │ ～ 6        │
│    │        UNIT         │             │
│    └─────────────────────┘             │
│                                        │
└──────────────────────────────────────┘
```

## Fig. 1B

**2 WIRELESS BASE STATION**

LINK

COMMUNICATION NETWORK

WIRELESS LINK

3

1

SERVER

COMMUNICATION DEVICE

| WIRELESS INFORMATION COLLECTION UNIT | 4 |

| CONGESTION DEGREE ASSESSMENT UNIT | 5 |

| SCHEDULING UNIT | 6 |

EP 3 223 560 A1

## Fig. 2

## Fig. 3

SERVER 100

START — S1

COLLECT WIRELESS INFORMATION — S2

COMPUTE RB USAGE RATIO — S3

IS RB USAGE RATIO LESS THAN OR EQUAL TO THRESHOLD? — S4
NO

YES

START/RESTART ONE SESSION — S5

CONTINUE COMMUNICATION FOR CERTAIN PERIOD OF TIME — S6

COMPUTE MAXIMUM THROUGHPUT VALUE — S7

IS MAXIMUM THROUGHPUT VALUE GREATER THAN OR EQUAL TO THRESHOLD? — S8
NO

YES

IS THERE UNSENT DATA? — S9
YES
NO

SUSPEND ONE SESSION — S11

IS THERE ONGOING SESSION? — S12
YES
NO

IS THERE WAITING SESSION? — S13
YES
NO

IS THERE WAITING SESSION? — S10
NO
YES

END

Fig. 4

# Fig. 5

1000

WIRED LINK

400 COMMUNICATION NETWORK

300 WIRELESS BASE STATION

WIRELESS LINK

200-1
200-2
200-3

100

**SERVER**

SERVER CONTROL UNIT — 120

WIRELESS INFORMATION COLLECTION UNIT — 121

THROUGHPUT MEASUREMENT UNIT — 122

CONGESTION DEGREE ASSESSMENT UNIT — 123

SCHEDULE COMPUTING UNIT — 124

110

SERVER DATA COMMUNICATION UNIT

**TERMINAL DEVICE**

220

210 — TERMINAL CONTROL UNIT

TERMINAL DATA COMMUNICATION UNIT

EP 3 223 560 A1

# Fig. 6

Fig. 7

SERVER 100

START — S1

COLLECT WIRELESS INFORMATION — S2

COMPUTE RB USAGE RATIO — S3

S4
IS RB USAGE RATIO LESS THAN OR EQUAL TO THRESHOLD?
NO
YES

START/RESTART ONE SESSION — S5

CONTINUE COMMUNICATION FOR CERTAIN PERIOD OF TIME — S6

COMPUTE RB USAGE RATIO — S14

S15
IS RB USAGE RATIO LESS THAN OR EQUAL TO THRESHOLD?
NO
YES

S11
SUSPEND ONE SESSION

S9
IS THERE UNSENT DATA?
YES
NO

S12
IS THERE ONGOING SESSION?
YES
NO

S13
IS THERE WAITING SESSION?
YES
NO

S10
IS THERE WAITING SESSION?
NO
YES

END

# Fig. 8

SERVER 100

START — S1

COLLECT WIRELESS INFORMATION — S2

COMPUTE RB USAGE RATIO — S3

IS RB USAGE RATIO LESS THAN OR EQUAL TO THRESHOLD? — S4
NO
YES

START/RESTART ONE SESSION — S5

CONTINUE COMMUNICATION FOR CERTAIN PERIOD OF TIME — S6

COMPUTE MAXIMUM THROUGHPUT VALUE — S7

S8a — IS MAXIMUM THROUGHPUT VALUE LESS THAN OR EQUAL TO THRESHOLD 1?
NO
YES

S8b — IS MAXIMUM THROUGHPUT VALUE LESS THAN OR EQUAL TO THRESHOLD 2?
NO
YES

SUSPEND ONE SESSION — S11

IS THERE ONGOING SESSION? — S12
YES
NO

S9 — IS THERE UNSENT DATA?
YES
NO

IS THERE WAITING SESSION? — S13
YES
NO

S10 — IS THERE WAITING SESSION?
NO
YES

END

# Fig. 9

Fig. 10

SERVER 100

START ~ S1

COLLECT WIRELESS INFORMATION ~ S2

COMPUTE RB USAGE RATIO ~ S3

IS RB USAGE RATIO LESS THAN OR EQUAL TO THRESHOLD? ~ S4 — NO

YES

START/RESTART ONE SESSION ~ S5

CONTINUE COMMUNICATION FOR CERTAIN PERIOD OF TIME ~ S6

COMPUTE RB USAGE RATIO ~ S14

S15a — IS RB USAGE RATIO LESS THAN OR EQUAL TO THRESHOLD 1? — NO — S11

YES

SUSPEND ONE SESSION — S11

S15b — IS RB USAGE RATIO LESS THAN OR EQUAL TO THRESHOLD 2? — NO

YES

S9 — IS THERE UNSENT DATA? — YES

NO

IS THERE ONGOING SESSION? ~ S12 — YES

NO

IS THERE WAITING SESSION? ~ S13 — YES

NO

S10 — IS THERE WAITING SESSION? — NO

YES

END

## INTERNATIONAL SEARCH REPORT

| | International application No. |
|---|---|
| | PCT/JP2015/005635 |

A. CLASSIFICATION OF SUBJECT MATTER
*H04W48/06*(2009.01)i, *H04W28/12*(2009.01)i, *H04W88/18*(2009.01)i

According to International Patent Classification (IPC) or to both national classification and IPC

B. FIELDS SEARCHED

Minimum documentation searched (classification system followed by classification symbols)
H04B7/24-7/26, H04W4/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2010-226342 A (KDDI Corp.),<br>07 October 2010 (07.10.2010),<br>abstract; paragraphs [0015], [0023]<br>& US 2010/0238861 A1<br>abstract; paragraphs [0017], [0025] | 1-10 |
| Y | JP 2014-175926 A (KDDI Corp.),<br>22 September 2014 (22.09.2014),<br>paragraphs [0045] to [0047], [0059] to [0061]<br>(Family: none) | 1-10 |
| Y | JP 2011-049617 A (Hitachi, Ltd.),<br>10 March 2011 (10.03.2011),<br>paragraph [0031]; fig. 18<br>& US 2011/0158187 A1<br>paragraphs [0087], [0088]; fig. 18<br>& EP 2291043 A1 | 4,7 |

☐ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 December 2015 (09.12.15) | 22 December 2015 (22.12.15) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012165107 A
- WO 2014016861 PCT
- JP 2004297479 A
- JP 2014233693 A